# EUROPEAN PATENT SPECIFICATION

(11) **EP 1 585 888 B1**
(45) Date of publication and mention of the grant of the patent: **26.09.2018**
(21) Application number: 03815122.1
(22) Date of filing: 10.01.2003
(51) Int. Cl.: F01D 11/00, F02B 37/00, F02B 37/007, F02B 37/18, F02B 39/14, F02C 3/13, F02B 37/12, F01D 25/18, F04D 29/10, F02B 37/16

(54) **Turbocharger**
Turbolader
Turbocompresseur

(43) Date of publication of application: 19.10.2005
(60) Divisional application: 07116473.5
(73) Proprietor: Honeywell International Inc., Morris Plains, NJ 07950 (US)
(72) Inventor: MATHIEU, Philippe, c/o Honeywell Garrett, 88150 Thaon-les-Vosges (FR); FIGURA, Giorgio, c/o Honeywell Garrett, 88150 Thaon-les-Vosges (FR); GENIN, Emeric, c/o Honeywell Garrett, 88150 Thaon-les-Vosges (FR); LAVEZ, Alexis, c/o Honeywell Garrett, 88150 Thaon-les-Vosges (FR)
(74) Representative: TBK
(86) International application number: PCT/IB2003/000042
(87) International publication number: WO 2004/063535

(56) References cited:
- EP-A- 0 357 246
- EP-A- 1 273 765
- DE-A- 3 817 617
- JP-A- 58 093 932
- US-A- 3 825 311
- US-A- 4 196 910
- US-A- 4 752 193
- US-A- 5 890 881

## Description

The invention relates to a turbocharger, preferably to a turbocharger for an internal combustion engine. The invention further relates to a multi-turbocharger boosting system.

According to document US 4,157,834 there is known a turbocharger with one or more conventional sealing portions each comprising a circumferential groove accommodating a sealing ring. Further sealing arrangements are disclosed in the documents EP-A1-1245793, EP-A2-1130220 and WO-A2-02086293.

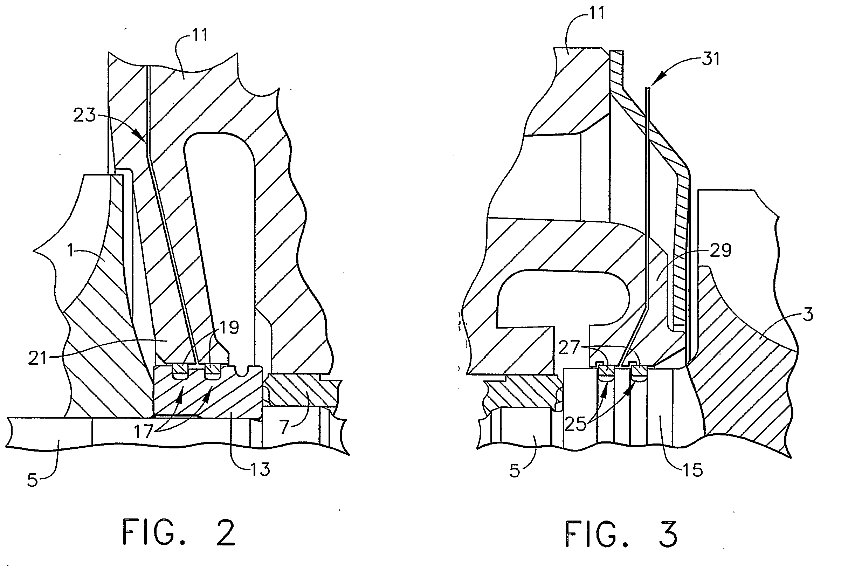

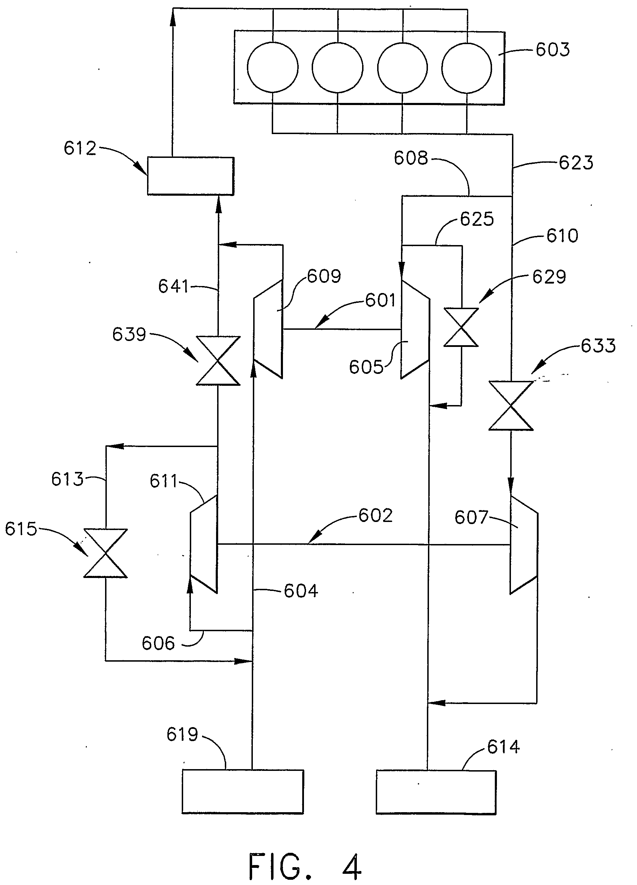

According to the document EP-A2-0 357 246, there is disclosed a shaft seal arrangement of a turbocharger according to the preamble of claim 1. According to this arrangement particularly shown in Figures 3 and 4, the throttling means in the portion between the merging point of a ventilation passage and the compressor space are constituted by sealing means including a seal ring accommodated in an annular groove.

According to the document US-5,890,881, there is disclosed a turbocharger comprising a similar arrangement of throttling means on the side of the turbine wheel as shown in Figures 1 and 2 of this document.

According to document D3, there is disclosed a turbocharger in which no particular throttling means are provided for the purpose obvious from document EP-A2-0 357 246.

The object of the invention is to provide an improved turbocharger and an improved multi-turbocharger boosting system.

According to the invention, the object is achieved by the combination of the features defined in claim 1. Preferable embodiments of the invention are set forth in the subclaims.

In the following the invention with its function, effects and advantages will be explained by an embodiment and reference examples with reference to the enclosed drawings in which
Figure 1 shows a cross-sectional view of a reference example of a turbocharger;
Figures 2 and 3 show enlarged views of the seal portion of the turbocharger in Fig. 1 at the compressor and turbine side thereof, respectively;
Figure 4 illustrates a layout of a multi-turbocharger boosting system in which a turbocharger is incorporated;
Figure 5 shows a cross-sectional view of a reference example of a turbocharger;
Figures 6 and 7 show enlarged views of the seal portion of the turbocharger in Fig. 5 at the compressor and turbine side thereof, respectively;
Figure 8 shows a cross-sectional view of a reference example of a turbocharger;
Figure 9 shows an enlarged cross-sectional view of the reference example shown in Fig. 8 of the turbocharger where a cartridge accommodating a variable nozzle device is used;
Figure 10 shows an enlarged cross-sectional view of a reference example of the turbocharger;
Figure 11 shows an enlarged cross-sectional view of an actuation mechanism according to the invention; and
Figure 12 shows an enlarged cross-sectional view of the sealing portion of the actuation mechanism in Fig. 11.

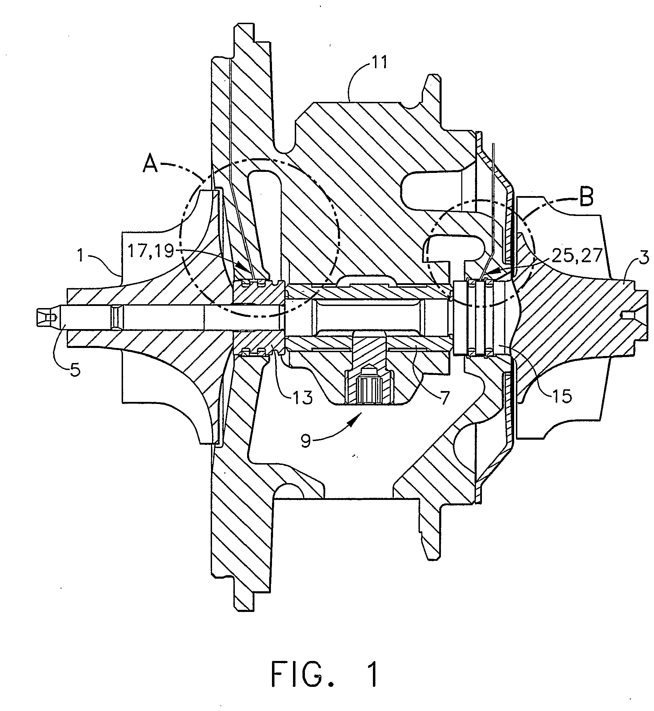

The essential parts of a turbocharger according to a reference example of a turbocharger are illustrated in Fig. 1 where details of the turbocharger housing and the particular construction of the turbocharger parts are not shown in detail. The turbocharger comprises a compressor impeller 1 and a turbine wheel 3 mounted on the opposite ends of a common shaft 5. The shaft 5 is freely rotatable in a bearing 7 provided with an oil supplying system 9 the arrangement of which is not particularly shown in Fig. 1. The bearing 7 is supported in a center housing 11. On both ends of the shaft 5, just behind the impeller 1 and the turbine wheel 3, there are provided two seal portions 13 and 15, respectively, for
avoiding that oil from the bearing 7 leaks out from the space encompassed by the center housing 11. In this embodiment the seal portion 15 at the turbine wheel side is formed as an enlarged portion of the shaft 5, whereas the seal portion and the impeller side of the shaft is formed as a seal sleeve or oil slinger 13.

As particularly shown in Fig. 2 in the outer circumferential surface of the oil slinger 13 there are provided two circumferential grooves 17 in which seal rings 19 are accommodated for providing a leak-tight seal between the oil slinger 13 and a collar portion 21 of the center housing 11. In the collar portion 21 there is provided at least one ventilation passage 23 which merges between the seal rings 19 into a central shaft opening formed by the collar portion 21 in order to communicate this opening with the air outside the turbocharger.

As further shown in Fig. 3 the extended diameter portion of the shaft 5 is also provided with a twin-groove arrangement similar to the described above, where in grooves 25 there are accommodated seal rings 27. A turbine side collar portion 29 of the center housing 11 forms a central opening encompassing the large diameter seal portion 15 of the shaft 5 and is in abutment with the seal or piston rings 27. The portion of the central shaft opening extending between the seal rings 27 is communicated with the air outside the turbocharger by means of a ventilation passage 31 which extends within the turbine side collar portion 29.

Both the above described oil seal system at the impeller side shown in Fig. 2 and the oil seal system at the turbine side shown in Fig. 3, prevent the oil supplied to the bearing 7 from leaking to the space where the impeller is arranged and thus contaminating the intake air of the combustion engine. Such situation occurs at low compressor speeds and mostly during operation modes in which there is almost no rotation of the compressor. Therefore, it is particularly advantageous to use a turbocharger having the above-described oil sealing system in a multi-turbocharger boosting system shown in Fig. 4.

The system comprises a first turbocharger 601 and a second turbocharger 602, wherein the two turbochargers are connected generally parallel in relation to an internal combustion engine 603. The first turbocharger 601 comprises preferably a free floating turbine 605 at its turbine side, whereas the second turbocharger 602 is equipped with a variable geometry turbine 607. The turbines 605 and 607 and respective compressors 609 and 611 are connected in parallel. According to the layout fresh air is fed in parallel to each of the compressors by means of a first fresh air conduit 604 and second fresh air conduit 606 and the air discharged from the compressors is guided through an intercooler 612 to the intake side of the internal combustion engine 603. At the turbine side of the layout the exhaust from the engine 603 is fed through a first exhaust conduit 608 and a second exhaust conduit 610 branching from a conduit or piping 623 to the first and second turbine 605 and 607, respectively, and the exhaust discharged from the parallel turbines is guided to a catalyst 614.

In the multi-turbocharger boosting system shown in Fig. 4 the second compressor 611 is provided with an air re-circulation system using air flow regulating means for adjusting the amount of the re-circulated air. The re-circulation system in this embodiment includes a by-pass conduit 613 with a butterfly valve 615 for adjusting the air mass-flow re-circulated back into the second fresh air conduit 606 connecting the inlet of the second compressor 611 with an air filter 619.

The multi-turbocharger boosting system further comprises an additional butterfly valve 639 being arranged in the conduit 641 connecting the second compressor 611 with the intercooler 612 between the merging point of the by-pass conduit 613 downstream of the second compressor 611 and the merging point of the first compressor 609 in the conduit 641.

At the turbine side of the multi-turbocharger boosting system there is provided a bypass passage 625 with a_corresponding waste gate valve 629. A butterfly or throttle valve 633 is arranged in the second exhaust conduit 610.

The multi-turbocharger boosting system according to Fig. 4 allows a highly efficient function of the internal combustion engine at low, medium and high rotational speeds of the internal combustion engine.

At a low rotational speed of the internal combustion engine 103, which means at about 1000-2000 rpm, the exhaust gas supplied through the exhaust conduit or piping 623 drives the free floating turbine 605 of the first turbocharger 601. The butterfly valve 633 is closed or nearly closed to reduce exhaust gas flow into turbine 607 to ensure an idling rotation of the second turbocharger 602 so as merely to avoid oil leakage from the bearing system thereof. Under this condition the speed of the first turbocharger is controlled by means of the waste gate valve 629. At this stage the first turbocharger works normally to supercharge the engine 603.

At the low rotational speed, the butterfly valve 615 is open so that a re-circulation at the second compressor 611 is achieved. Due to the particular design of the layout, during the re-circulation the pressure in the second compressor 602 can be lowered so that the trust load becomes less important and the reliability is improved.
The additional butterfly valve 639 remains closed and the first compressor 609 works normally to supercharge the engine 603.

In the range of a medium rotational speed of the internal combustion engine, which means at about 2000-2500 rpm, the butterfly or throttle valve 633 opens progressively so as to regulate the pressure before the turbine and the exhaust gas flow drives the second turbocharger 602. In the same time the butterfly valve 615 is progressively closed in order to balance the power between the second compressor 611 and the second turbine, so that by operation of the butterfly valve 615 the speed of the second turbocharger 602 can be regulated.

In the range of a high rotational speed of the internal combustion engine, which means at about 2500 - 4000 rpm, the butterfly valve 633 is completely or almost completely open, wherein the speed of the turbine 605 is regulated by means of the waste gate valve 629. During this operation the additional butterfly valve 639 is open and the butterfly valve 615 is totally closed.

In the above-mentioned mode of operation at a low rotational speed, the butterfly valve 633 can be closed or nearly closed without causing thereby an oil leakage. Although the pressure behind the impeller 1 of turbocharger 602 becomes quite low, the pressure drop at the outer piston ring 19 is decreased by ventilating the space between the outer and inner piston rings by air at normal atmosphere pressure. The further seal ring 19 positioned between the ventilation passage 23 and the bearing 7 is also subject to reduced pressure drop so that an oil leakage to the impeller side of the turbocharger can be efficiently avoided even if the rotation of the second turbocharger is stopped.

The ventilation passage 31 arranged at the turbine side as shown in Fig. 3 has almost the same function as the ventilation passage 23 at the impeller side of the turbocharger. At low rotational speed of the internal combustion engine, there is also a significant drop in pressure in the space around and behind the turbine wheel 3.

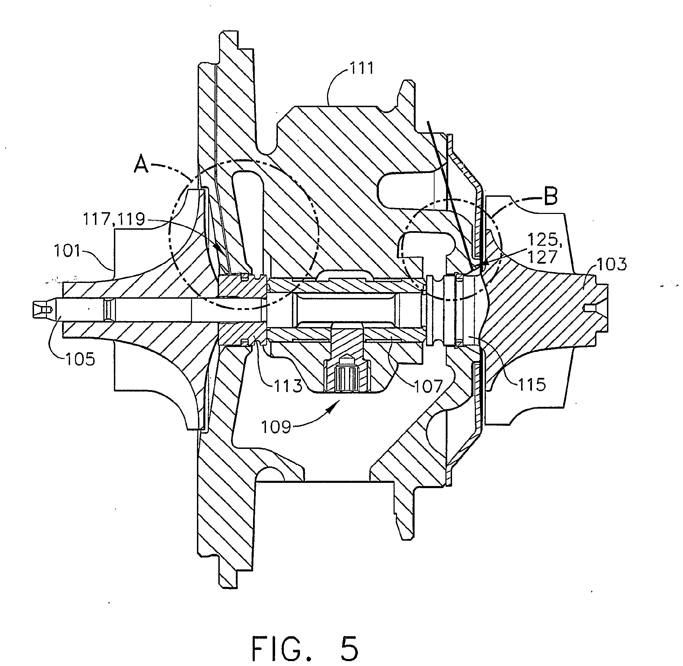

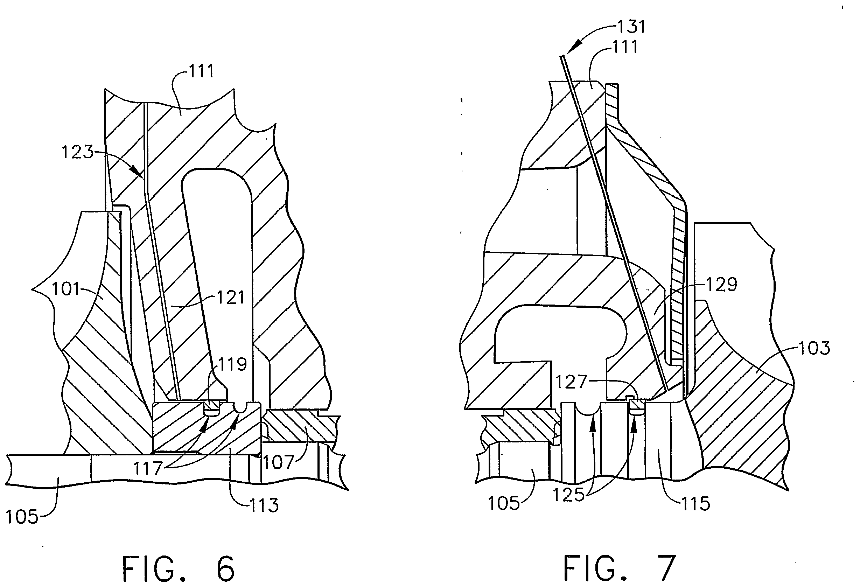

According to a reference example of a turbocharger shown in Figs. 5, 6 and 7 the outer seal arrangement consisting of a seal or piston ring and a groove can be omitted, whereas the merging point of the ventilation passage is to be arranged close to a single piston ring at the corresponding groove. As illustrated by Fig. 6 the collar portion 121 of the center housing 111 is formed with an invertly sloped surface, wherein the merging point of the ventilation passage 123 is arranged at the radially invert almost lowest part of the sloped surface in close proximity to the seal arrangement 117, 119.

However the merging point of the ventilation passage can be also directly arranged in the center opening of the collar portion 121, so that the clearance of the fit between the shaft and the center opening in the portion between the merging point and the compressor space serves as throttling means.

As shown in Fig. 7 almost the same design as the design shown in Fig. 6 is adopted for the turbine side of the turbocharger where a ventilation passage 131 communicates the space behind the turbine wheel being closest to the seal arrangement 125, 127 with the air outside the turbocharger.

With regard to the reference example shown in Figs. 5 to 7, in this embodiment the same design of the oil slinger 113 and the enlarged seal portion 115 of the shaft 105 as in the reference example shown in Figs. 1 to 3 is used. This means that although these elements keep the above-described twin-groove design only the respective collar portions 121 and 129 are designed such that the central openings thereof face only one seal arrangement consisting of one groove and one seal ring.

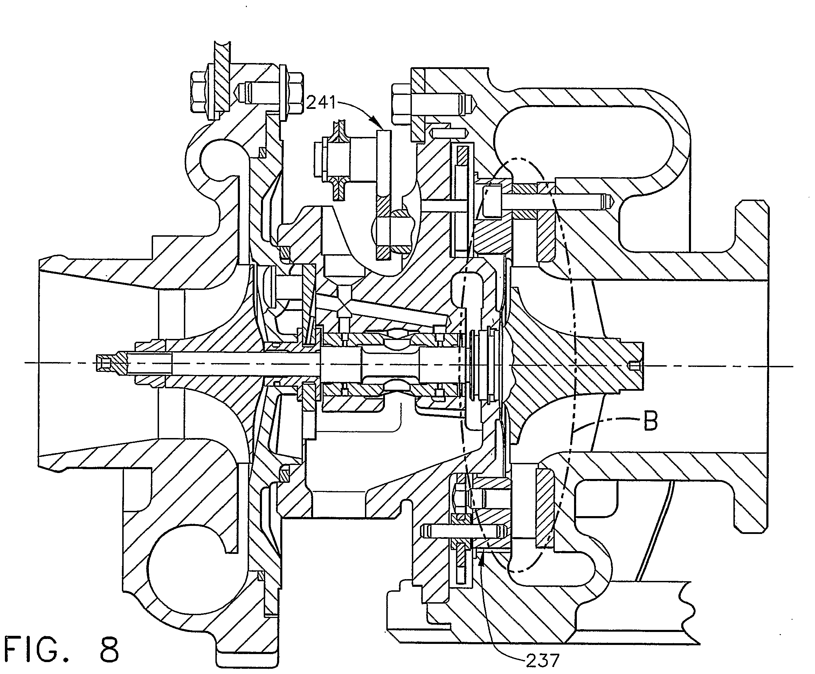

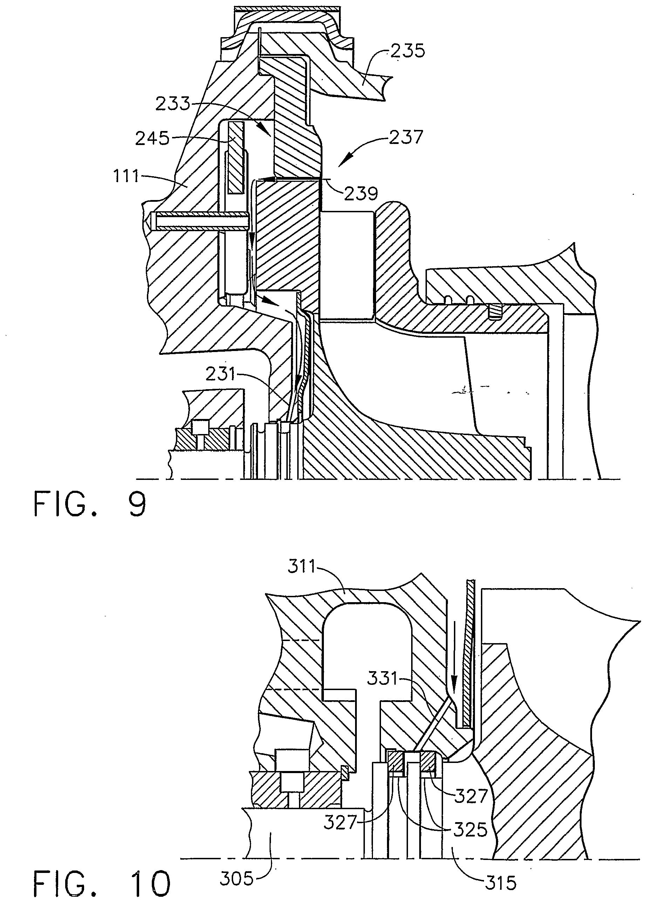

According to a reference example of a turbocharger shown in Figs. 8, 9 and 10 a variable geometry nozzle device is designed and arranged in such a way between the center housing 111 and a turbine housing 235 that there is provided at least one gas passage 237 which communicates the exhaust gas inlet side of the turbine with the ventilation passage 231 as shown in Figs. 9 and 10 representing arrangements of the ventilation passage at the turbine side similar to the reference examples, respectively.

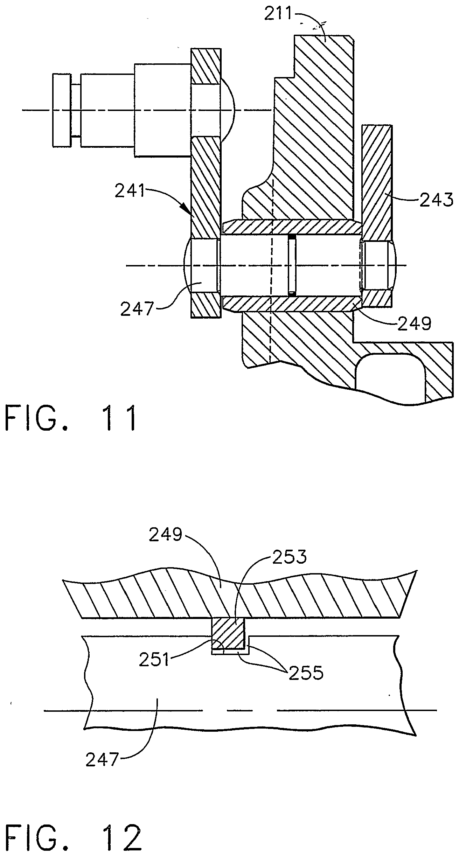

According to a reference example of a turbocharger shown in Fig. 11 and 12 there is provided a particular construction of an actuation device 241 comprising a lever for circumferentially shifting the unison ring 245 of the variable nozzle device shown in Fig. 9. In this embodiment an actuating shaft 247 of the actuation device is rotatably supported in a bushing 249 interposed in the center housing 211. Between the actuating shaft or crank pin 247 and the bushing 249 there is provided a seal arrangement consisting of a circumferential groove 251 and a seal ring 253. The seal ring 253 has elastic properties which allows each to be stocked into the bushing internal face as is the case with the seal rings described above. As can be understood from the illustration in Fig. 12 the seal ring has a substantially rectangular cross-section with two adjacent sealing surfaces abutting against the bushing 249 and the crank pin 247. For this purpose the axial thickness of the seal ring 253 is smaller than the axial width of the groove 251, whereas the inner diameter of the seal ring 253 exceeds the diameter of the bottom portion of the groove 251, such that an L-shaped clearance 255 shown in Fig. 12 is established when the seal ring is exposed to the exhaust gas pressure from the right side in Fig. 12.

The above construction of the actuation device 241 can be applied in each of the reference examples shown in Figs. 9 and 10.

Furthermore the sealing portion described above with reference to Figures 11 and 12 is also preferably applicable in each of the reference examples described above with reference to Figures 1 to 10.

## Claims

1. A turbocharger comprising a compressor impeller (101) connected by a shaft being rotatably supported in a bearing (107) with a turbine wheel (103) and at least one sealing arrangement with a sealing portion arranged in a clearance between said shaft and a center opening of a center housing (111) for avoiding leakage between the bearing and the space where the compressor impeller is located, wherein said sealing arrangement comprises at least one pressure increasing means for increasing the pressure at a low pressure side of the sealing portion, wherein said low pressure side of the sealing portion is the side being communicated with and/or facing said space where the compressor impeller (101) is located, and said pressure increasing means comprises a ventilation passage (123) communicated with the space where the compressor impeller (101) is located, adjacent to the sealing portion (117, 119) behind the compressor impeller, **characterised in that** the ventilation passage (123) merges into said center opening of the center housing so that the clearance of the fit between the shaft and the center opening in the portion between the merging point of the ventilation passage (123) and the compressor space serves as throttling means and said sealing portion (117, 119) comprises a circumferential groove (251) accommodating a sealing ring (253), and **in that** said sealing ring (253) and said groove (251) have a rectangular cross section and wherein the size and cross-section of the sealing ring (253) are such that in the sealing position of the ring a radial and axial clearance between the high pressure side of the ring (253) and the groove (251) can be established.

2. A turbocharger according to claim 1, wherein said pressure increasing means comprises a passage communicated with air outside of said turbocharger.

3. A multi-turbocharger boosting system comprising at least a first turbocharger (601) and a second turbocharger (602), wherein at least the second turbocharger (602) is a turbocharger according to one of claims 1 to 2.

4. A multi-turbocharger boosting System according to claim 3, wherein the pressure increasing means of the second turbocharger (602) are communicated with the compressor output and/or the turbine input of the first turbocharger (601).

## Patentansprüche

1. Turbolader umfassend ein Kompressorlaufrad (101) verbunden durch eine in einem Lager (107) rotierbar gestützt Welle mit einem Turbinenlaufrad (103) und zumindest einer Dichtungsanordnung mit einem Dichtungsabschnitt angeordnet in einem Spielraum zwischen der Welle und einer mittigen Öffnung eines Zentralgehäuses (111) zum Verhindern eines Lecks zwischen dem Lager und dem Raum, in dem sich das Kompressorlaufrad befindet, wobei die Dichtungsanordnung umfasst zumindest eine Druckerhöhungsvorrichtung zum Erhöhen des Drucks an einer Niedrigdruckseite des Dichtungsabschnitts, wobei die Niedrigdruckseite des Dichtungsabschnitts die Seite ist, welche mit dem Raum, in dem sich das Kompressorlaufrad (101) befindet, kommuniziert und / oder diesem Raum zugewandt ist, und die Druckerhöhungsvorrichtung umfasst einen mit dem Raum, in dem sich das Kompressorlaufrad (101) befindet, kommunizierenden Belüftungsdurchgang (123), benachbart zu dem Dichtungsabschnitt (117, 119) hinter dem Kompressorlaufrad, **dadurch gekennzeichnet, dass** der Belüftungsdurchgang (123) in die mittige Öffnung des Zentralgehäuses einmündet, sodass das Passungsspiel zwischen der Welle und der mittigen Öffnung in dem Abschnitt zwischen dem Einmündungspunkt des Belüftungsdurchgangs (123) und dem Kompressorraum als Drosselungseinrichtung dient und der Dichtungsabschnitt (117, 119) eine umlaufende Ringnut (251) umfasst, die einen Dichtungsring (253) beherbergt, und dass der Dichtungsring (253) und der Ringnut (251) einen rechteckigen Querschnitt aufweisen und wobei die Größe und Querschnitt des Dichtungsrings (253) so sind, dass in der Dichtungsposition des Rings ein radialer und axialer Spielraum zwischen der Hochdruckseite des Rings (253) und der Ringnut (251) gebildet werden kann.

2. Turbolader nach Anspruch 1, wobei die Druckerhöhungsvorrichtung einen mit Luft außerhalb des Turboladers kommunizierenden Durchgang umfasst.

3. Multi-Turbolader-Aufladesystem umfassend zumindest einen ersten Turbolader (601) und einen zweiten Turbolader (602) wobei zumindest der zweite Turbolader (602) ein Turbolader nach einem der Ansprüche 1 bis 2 ist.

4. Multi-Turbolader-Aufladesystem nach Anspruch 3, wobei die Druckerhöhungsvorrichtung des zweiten Turboladers (602) mit dem Kompressorauslass und / oder dem Turbineneinlass des ersten Turboladers (601) kommuniziert sind.

## Revendications

1. Turbocompresseur comprenant une roue de compresseur (101) reliée par un arbre qui est supporté avec faculté de rotation dans un palier (107) à une roue de turbine (103) et au moins un agencement d'étanchéité avec une partie d'étanchéité agencée dans un jeu entre ledit arbre et une ouverture centrale d'un logement central (111) pour éviter une fuite entre le palier et l'espace où est située la roue de compresseur, ledit agencement d'étanchéité comprenant au moins un moyen d'augmentation de pression pour augmenter la pression sur un côté basse pression de la partie d'étanchéité, ledit côté basse pression de la partie d'étanchéité étant le côté qui communique avec et/ou fait face audit espace où est située la roue de compresseur (101), et ledit moyen d'augmentation de pression comprenant un passage de ventilation (123) communiquant avec l'espace où est située la roue de compresseur (101), au voisinage de la partie d'étanchéité (117, 119) derrière la roue de compresseur,
**caractérisé en ce que** le passage de ventilation (123) arrive dans ladite ouverture centrale du logement central de telle sorte que le jeu de l'ajustement entre l'arbre et l'ouverture centrale dans la partie entre le point d'arrivée du passage de ventilation (123) et l'espace de compresseur sert de moyen d'étranglement et ladite partie d'étanchéité (117, 119) comprend une rainure circonférentielle (251) accueillant une bague d'étanchéité (253), et
**en ce que** ladite bague d'étanchéité (253) et ladite rainure (251) ont une section transversale rectangulaire, et dans lequel la taille et la section transversale de la bague d'étanchéité (253) sont telles que dans la position d'étanchéité de la bague, un jeu radial et axial entre le côté haute pression de la bague (253) et la rainure (251) peut être établi.

2. Turbocompresseur selon la revendication 1, dans lequel ledit moyen d'augmentation de pression comprend un passage communiquant avec l'air à l'extérieur dudit turbocompresseur.

3. Système de suralimentation multi-turbocompresseur comprenant au moins un premier turbocompresseur (601) et un deuxième turbocompresseur (602), au moins le deuxième turbocompresseur (602) étant un turbocompresseur selon une des revendications 1 à 2.

4. Système de suralimentation multi-turbocompresseur selon la revendication 3, dans lequel les moyens d'augmentation de pression du deuxième turbocompresseur (602) communiquent avec la sortie de compresseur et/ou l'entrée de turbine du premier turbocompresseur (601).
